# EUROPÄISCHE PATENTSCHRIFT

(11) **EP 2 791 525 B1**
(45) Veröffentlichungstag und Bekanntmachung des Hinweises auf die Patenterteilung: **01.11.2017**
(21) Anmeldenummer: 12794932.9
(22) Anmeldetag: 26.11.2012
(51) Int. Cl.: F16D 3/38, B21B 35/14

(54) **KREUZGELENKWELLE**
CARDAN-JOINT SHAFT
ARBRE À JOINT UNIVERSEL

(30) Priorität: 13.12.2011 DE 102011088327
(43) Veröffentlichungstag der Anmeldung: 22.10.2014
(73) Patentinhaber: SMS group GmbH, 40237 Düsseldorf (DE)
(72) Erfinder: FINCK, Markus, 40472 Düsseldorf (DE); WEISSBRODT, Rainer, 45473 Mülheim (DE); MUSTAFI, Emir, 40699 Erkrath (DE)
(74) Vertreter: Klüppel, Walter
(86) Internationale Anmeldenummer: PCT/EP2012/073565
(87) Internationale Veröffentlichungsnummer: WO 2013/087399

(56) Entgegenhaltungen:
- WO-A2-2012/023043
- DE-A1- 19 740 564
- JP-U- 61 004 022
- US-A1- 2004 114 991

## Beschreibung

Die Erfindung betrifft eine Kreuzgelenkwelle umfassend einen ersten und einen zweiten Gelenkwellenabschnitt und jeweils an einem Befestigungsbereich von erstem und zweitem Gelenkwellenabschnitt insbesondere mittels Schraubverbindungen befestigte Lagerlaschen, die jeweils einenends über den jeweils zugeordneten ersten oder zweiten Gelenkwellenabschnitt überstehen und in diesem Überstandsbereich zwischen sich ein einteilig ausgebildetes Zapfenkreuz halten, das mit jeweils einem Zapfen in einer Öffnung jeweils einer Lagerlasche gelagert ist.

Weiterhin richtet sich die Erfindung auf eine Richtmaschine mit einer Anzahl von Richtwalzen und einem Antrieb für die Richtwalzen, wobei die Richtwalzen in einer Wechselkassette angeordnet und über Gelenkwellen mit einem Hauptgetriebe verbindbar sind.

Das Richten von metallischen Bändern erfolgt in Richtmaschinen, die eine Mehrzahl an Richtwalzen aufweisen, die üblicherweise jeweils mittels einer Doppelkreuzgelenkwelle angetrieben werden. Beim Richten von metallischen Bändern besteht eine Anhängigkeit zwischen der Dicke und der Festigkeit der Bänder einerseits und der benötigten Anzahl sowie dem Durchmesser der Richtwalzen andererseits. Zum Richten von metallischen Bändern mit unterschiedlichen Banddicken werden an den Richtmaschinen daher Wechselkassetten eingesetzt, die jeweils mit Walzen unterschiedlichen Durchmessers bestückt sind. Die stetig steigenden Anforderungen im Bereich des Bandrichtens erfordern den Einsatz immer höherer Richtmomente bei gleichzeitig kleineren Richtrollen oder Richtwalzen. Der Antrieb der einzelnen Richtrollen erfolgt in der Regel über eine Motor-/Getriebeeinheit, die durch eine geeignete Kupplung mit den einzelnen Richtrollen verbunden ist. Da die Abtriebswellen der Getriebeeinheit und die Antriebszapfen der möglicherweise wechselbaren Richtrollenkassette in der Regel einen verstellbaren Achsversatz aufweisen, muss diese Kupplung in der Lage sein, diesen Versatz auszugleichen. Aufgrund der hierbei zu realisierenden, relativ großen Beugungswinkel und der hohen Verfügbarkeit werden zu diesem Zweck häufig Doppelgelenkwellen mit Kreuzgelenk und Zapfenkreuz eingesetzt.

Eine gattungsgemäße, ein einteiliges Zapfenkreuz und ein geteiltes Gabelteil aufweisende, Kreuzgelenkwelle ist aus der US 2004/114991 A1 sowie aus der US 1,153,789 A bekannt. Bei der aus der US 1,153,789 bekannten Kreuzgelenkwelle sind die Lagerlaschen mit Schraubverbindungen an einem jeweiligen Gelenkwellenabschnitt befestigt, wobei die Schäfte der Schrauben in im Befestigungsbereich in der Oberfläche des jeweiligen Gelenkwellenabschnitts ausgebildete Ausnehmungen formschlüssig und kraftübertragend eingreifen. Nachteilig bei dieser bekannten Kreuzgelenkwelle ist es, dass die bei der Übertragung eines Drehmomentes auftretenden Kräfte ausschließlich über die Schäfte der Schraubverbindungen übertragen werden. Außerdem stehen die Schraubverbindungen und die Lagerschalen aus der Oberfläche des jeweiligen Gelenkwellenabschnitts hervor, so dass sie einerseits mechanisch stark beansprucht und andererseits als aus einer Oberfläche hervorstehende Elemente einer besonderen Zerstörungsgefahr bei anschlagenden Materialstücken, beispielsweise im Havariefall einer Richtmaschine, ausgesetzt sind.

Ebenso ist aus der DE 36 19 892 A1 eine Kreuzgelenkwelle mit einem aus geteilten Lagergabeln bestehenden Kreuzgelenk bekannt. Hierbei sind die einzelnen, ein einteilig ausgebildetes Zapfenkreuz haltenden Gabelelemente an kreisringförmig an den miteinander zu verbindenden ersten und zweiten Gelenkwellenabschnitten ausgebildeten Flanschen befestigt. Zur Ausbildung einer verdrehsicheren Verbindung greifen hierbei in den Gabelelementen ausgebildete Vorsprünge formschlüssig kraftübertragend in entsprechende Ausnehmungen der kreisringförmigen Anschlagsflansche ein. Auch diese Konstruktion weist den Nachteil auf, dass hier aus der Oberfläche der Gelenkwellenabschnitte hervorstehende Flansche ausgebildet sind. Neben der mechanischen Problematik weist diese Ausführungsform ebenso wie die vorhergehend beschriebene den Nachteil auf, dass dadurch die Bauform des Kreuzgelenkes relativ groß, zumindest größer dimensioniert ist, als es allein aufgrund der Dimensionierung der anliegenden Gelenkwellenabschnitte und deren Festigkeitsauslegung zur Übertragung der gewünschten Drehmomente notwendig wäre.

Der Erfindung liegt die Aufgabe zugrunde, eine Lösung zu schaffen, die die Realisierung eines kompakt bauenden und dennoch die Übertragung großer Drehmomente gewährleistenden Kreuzgelenkes ermöglicht.

Diese Aufgabe wird durch den Gegenstand des Patentanspruchs 1 gelöst. Konkret wird bei einer Kreuzgelenkwelle der eingangs näher bezeichneten Art diese Aufgabe erfindungsgemäß dadurch gelöst, dass jede Lagerlasche zumindest bereichsweise formschlüssig kraftübertragend in jeweils eine von zwei diametral gegenüberliegend im Befestigungsbereich in der Umfangsfläche des ersten und des zweiten Gelenkwellenabschnittes ausgebildete Ausnehmungen eingreift, die jeweils als offene Passfedernut ausgebildet sind, und dass der nicht über den jeweils zugeordneten ersten oder zweiten Gelenkwellenabschnitt überstehende Bereich einer jeden Lagerlasche eine zur jeweils zugeordneten Ausnehmung oder Passfedernut korrespondierend ausgebildete Passfeder aufweist oder als zur jeweils zugeordneten Ausnehmung oder Passfedernut korrespondierend ausgebildete Passfeder ausgebildet ist, wobei die seitlichen Begrenzungswände einer jeden Ausnehmung oder Passfedernut leicht keilförmig zueinander konvergierend von der jeweils zugehörigen Stirnfläche des ersten oder zweiten Gelenkwellenabschnitts beginnend in Axialrichtung der Ausnehmung auf die entgegengesetzte Ausnehmungsrückwand zulaufend ausgebildet sind.

Ebenso wird die vorstehende Aufgabe durch eine Richtmaschine nach Anspruch 7 gelöst.

Vorteilhafte Ausgestaltungen und zweckmäßige Weiterbildungen der Erfindung sind Gegenstand der Unteransprüche.

Ein wesentlicher Aspekt der Erfindung besteht somit darin, dass die Lagerlaschen an sich jeweils formschlüssig kraftübertagend in der Außenfläche, insbesondere der Umfangsfläche, einer jeden Gelenkwelle ausgebildete Ausnehmungen, insbesondere eine Passfedernut ausbildende Ausnehmungen, eingreifen und in dieser Position fixiert sind. Insbesondere ist jede Kreuzgelenklasche in einer insbesondere nach Art einer Passnut ausgebildeten Ausnehmung angeordnet, was die Erfindung in Ausgestaltung vorsieht.

Insgesamt wird dadurch eine Bauform einer Kreuzgelenkwelle mit einer geteilten Gabel und einem einteiligen Zapfenkreuz vorgeschlagen, die konstruktiv und fertigungstechnisch relativ einfach umzusetzen ist. Das Kreuzgelenk baut zudem sehr kompakt, so dass die übertragbaren Drehmomente sehr groß und deutlich größer als bei den derzeit marktüblichen Gelenkwellen sind. Dadurch, dass bei der erfindungsgemäßen Ausführungsform im Unterschied zu den aus dem Stand der Technik bekannten Ausführungsformen die Lagerlaschen insbesondere mit ihrem gesamten, nicht über den jeweiligen zugeordneten Gelenkwellenbereich überstehenden Körperabschnitt in den Körper des zugeordneten Gelenkwellenabschnittes integriert angeordnet sind, wird es möglich, bei einer gegebenen Baugröße deutlich größere Drehmomente als mit einer reinen Schraubverbindung wie nach dem Stand der Technik zu übertragen. Ebenso bedeutet dies, dass bei festgelegtem, maximal zu übertragenden Drehmoment die Bauform des Kreuzgelenkes und damit auch die Durchmesser der dazugehörigen Kreuzgelenkwelle kleiner als beim Stand der Technik ausgeführt sein können.

Um eine besonders sichere Fixierung des jeweiligen Lagerlaschenbereiches in der zugeordneten Ausnehmung oder Passfedernut zu erreichen, zeichnet sich die Erfindung weiterhin dadurch aus, dass jede Passfedernut an der Stirnfläche von erstem oder zweitem Gelenkwellenabschnitt beginnt.

Um die Festigkeit der Kreuzgelenkverbindung zu verbessern, sieht die Erfindung gemäß einem ersten Ausführungsbeispiel vor, dass im Grund des vorderen, an die jeweils zugehörige Stirnfläche von erstem oder zweitem Gelenkwellenabschnitt anschließenden Ausnehmungsbereichs randseitig mindestens jeweils ein nicht formschlüssig von einer Lagerlasche ergriffener Freistich ausgebildet ist.

Weiterhin ist es von Vorteil, wenn die Lagerlaschen in die Außenkontur des jeweiligen Gelenkwellenabschnitts zumindest annähernd fortführender Weise ausgebildet und in der Ausnehmung angeordnet sind, wodurch sich die Erfindung ebenfalls auszeichnet.

Vorteilhafter Weise beginnt jede Passfedernut an der Stirnfläche von erstem oder zweitem Gelenkwellenabschnitt, was die Erfindung ebenfalls vorsieht.

Eine besonders vorteilhafte Lagerung der Zapfen des Zapfenkreuzes in den jeweils zugeordneten Öffnungen einer Lagerlasche lässt sich dadurch realisieren, dass die Lager als Gelenklager ausgebildet sind. Gelenklager zeichnen sich durch eine hohe statische Tragzahl aus. Hierdurch kann die elastische Verformung des Zapfenkreuzes kompensiert werden. Die Erfindung zeichnet sich daher weiterhin dadurch aus, dass die Zapfen jeweils in einer/einem, in der jeweils zugeordneten Öffnung der Lagerlasche angeordneten Buchse oder Lager, insbesondere einem Gelenklager, gehalten und gelagert sind.

Besonders vorteilhaft lässt sich eine erfindungsgemäße Kreuzgelenkwelle beim Antrieb von Richtwalzen einer Richtmaschine einsetzen, in dem die Kreuzgelenkwelle Bestandteil eines Richtwalzenantriebs einer Richtmaschine ist.

Da hierbei in der Regel Doppelkreuzgelenkwellen zum Einsatz kommen sieht die Erfindung schließlich auch vor, dass die Kreuzgelenkwelle Bestandteil einer Doppelkreuzgelenkwelle ist, deren beide Kreuzgelenke jeweils einen ersten und einen zweiten Gelenkwellenabschnitt mit mittels Lagerlaschen angekoppeltem Zapfenkreuz aufweisen.

Die Erfindung ist nachstehend anhand der Zeichnung beispielhaft näher erläutert.
Dies zeigt in
- Fig. 1: in perspektivischer Darstellung den Kreuzgelenkbereich einer Kreuzgelenkwelle,
- Fig. 2: in perspektivischer Darstellung den einen Teilbereich des Kreuzgelenkbereiches und in

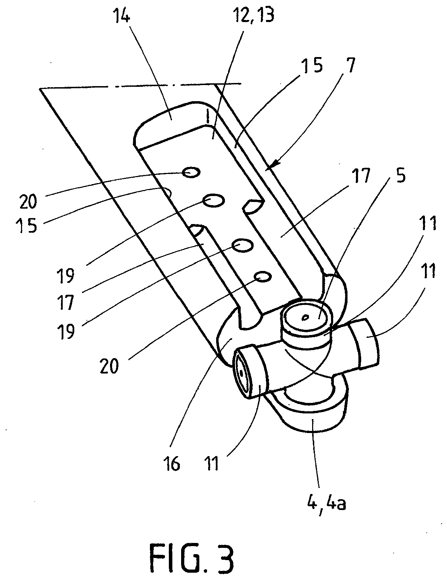

- Fig. 3: den Teilbereich nach Fig.2 bei einer entfernten Lagerlasche.

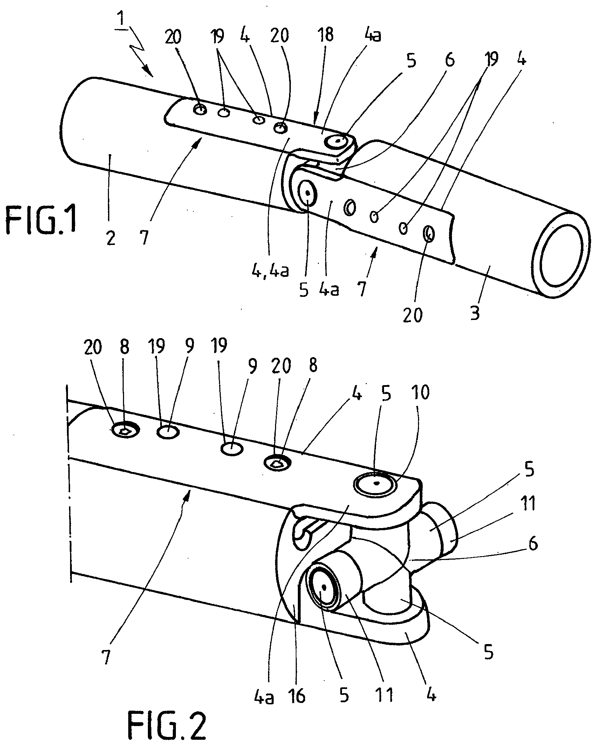

Die Fig. 1 zeigt einen Kreuzgelenkbereich mit einem Kreuzgelenk 18 einer insgesamt mit 1 bezeichneten Kreuzgelenkwelle mit einem ersten Gelenkwellenabschnitt 2 und einem zweiten Gelenkwellenabschnitt 3, an welchen jeweils zwei sich diametral gegenüberliegende Lagerlaschen 4 angeordnet sind. Die Lagerlaschen 4 stehen jeweils einenends mit einem Überstandsbereich 4a über den jeweils zugeordneten ersten oder zweiten Gelenkwellenabschnitt 2, 3 über. Die sich am ersten oder zweiten Gelenkwellenabschnitt 2, 3 jeweils gegenüberliegenden Überstandsbereiche 4a bilden zusammen jeweils ein Gabelteil aus, zwischen welchem zwei sich gegenüberliegende Zapfen 5 eines einteilig ausgebildeten Zapfenkreuzes 6 gehalten sind. An einem jeweiligen Befestigungsbereich 7 der Gelenkwellenabschnitte 2, 3 sind die Lagerlaschen 4 jeweils mittels Zylinderschrauben 8 befestigt und mittels Zylinderstiften 9 fixiert. Die Zapfen 5 sind jeweils in einer im Überstandsbereich 4a einer Lagerlasche 4 ausgebildeten Öffnung 10, einem Lagerauge, gehalten. Die Zapfen 5 sind jeweils in einem in der zugeordneten Öffnung 10 angeordneten Gelenklager 11 gelagert.

In der Außen- oder Umfangsfläche von erstem und zweitem Gelenkwellenabschnitt 2, 3 sind sich jeweils diametral gegenüberliegend Ausnehmungen 12 ausgeformt, die jeweils als Passfedernut 13 ausgebildet sind. Mit ihrem jeweils nicht nach außen über die freiliegende Stirnfläche 16 von erstem und zweitem Gelenkwellenabschnitt 2, 3 überstehenden Körperteil greift jede Lagerlasche 4 formschlüssig mit Möglichkeit zur Kraftübertragung in eine Ausnehmung 12 ein und ist in dieser festgelegt. Hierbei ist die Außenkontur einer jeden Lagerlasche 4 derart ausgebildet, dass sich bei in eine Ausnehmung 12 eingesetzter Lagerlasche 4 die Außenkontur der Umfangsfläche des jeweiligen Gelenkwellenabschnitts 2, 3 in der Außenfläche der Lagerlasche 4 zumindest im Wesentlichen fortsetzt.

Der nicht über den jeweils zugeordneten ersten oder zweiten Gelenkwellenabschnitt 2, 3 überstehende Bereich einer jeden Lagerlasche 4 weist eine zur jeweils zugeordneten Passfedernut 13 oder Ausnehmung 12 korrespondierend ausgebildete Passfeder auf oder ist selbst als zur jeweils zugeordneten Passfedernut 13 oder Öffnung 12 korrespondierend ausgebildete Passfeder ausgebildet. Wie im Ausführungsbeispiel ist der nicht überstehende Bereich einer Lagerlasche 14 dann vollständig in die offen ausgebildete Passfedernut 13 oder Öffnung 12 einschiebbar.

Jede Passfedernut 13 oder Ausnehmung 12 beginnt jeweils an der Stirnfläche 16 von erstem oder zweitem Gelenkwellenabschnitt 2, 3 und weist in Axialrichtung der Ausnehmung 12 oder passfedernut 13 leicht keilförmig aufeinanderzu konvergierend auf eine Ausnehmungsrückwand 14 zulaufende Seitenwände 15 aus. Im Grund des vorderen, an die jeweils zugehörige Stirnfläche 16 von erstem oder zweitem Gelenkwellenabschnitt 2,3 anschließenden Ausnehmungsbereichs ist jeweils mindestens ein nicht formschlüssig kraftübertragend von einer Lagerlasche 4 ergriffener Freistich 17 ausgebildet. Ferner sind am Grund oder Boden einer Ausnehmung 12 oder Passfedernut 13 Bohrungen zur Aufnahme der Zylinderschrauben 8 und Zylinderstifte 9 vorhanden.

Die Zapfen 5 sind jeweils in einer in der jeweils zugeordneten Öffnung 10, dem Lagerauge, einer Lagerlasche 4 angeordneten Buchse oder einem Lager, insbesondere Gelenklager 11, gehalten und gelagert.

Die Kreuzgelenkwelle 1 kann Bestandteil einer Doppelkreuzgelenkwelle sein, deren beide Kreuzgelenke 18 jeweils einen ersten und einen zweiten Gelenkwellenabschnitt 2,3 mit mittels Lagerlaschen 4 angekoppeltem Zapfenkreuz aufweisen.

Die Kreuzgelenkwelle 1 ist Bestandteil eines nicht dargestellten Richtwalzenantriebs einer Richtmaschine. Deren Richtwalzen oder Richtrollen sind in einer Wechselkassette angeordnet und über Kreuzgelenkwellen 1 mit einem Hauptgetriebe verbindbar.

Bei der vorstehend erläuterten Ausführungsform ist das Gabelteil des Kreuzgelenks 18 durch zwei Lagerlaschen 4 gebildet, die in eine offene Passfedernut 13 eingepasst werden. Die Lagerlaschen 4 werden mit Hilfe der Zylinderschrauben 8 montiert. Die Fixierung erfolgt mittels eingepasster Zylinderstifte 9. Das Zapfenkreuz 6 kann daher einteilig ausgeführt werden. Zur Lagerung des Zapfenkreuzes 6 in den Lageraugen (Öffnungen 10) der geschraubten Lagerlaschen 4 sind die Gelenklager 11 vorgesehen. Diese haben gegenüber den ansonsten üblicherweise verwendeten Nadellagern den Vorteil einer wesentlich höheren statischen Tragzahl. Die elastische Verformung des Zapfenkreuzes 6 kann auf diese Weise ebenfalls kompensiert werden. Eine Kantenpressung oder eine einseitige Belastung einiger weniger Wälzkörper wird damit vermieden. Aufgrund der moderaten Drehzahlen bei der Anwendung an Richtmaschinen fällt der Nachteil der erhöhten Lagerreibung nicht ins Gewicht. Zur Erhöhung der mechanischen Festigkeit der Kreuzgelenkwelle 1 sind im vorderen Bereich einer jeden Passfedernut 13 Freistiche 17 ausgebildet.

Die beidseitige Einpassung der Lagerlaschen 4 in die jeweilige Passfedernut 13 wird durch die leichte Keilform der tragenden Flanken (Seitenwände 15) in Axialrichtung sichergestellt. Die Lagerlaschen 4 werden nach hinten zur Rückwand 14 hin eingepresst und verschraubt. In diesem vormontierten Zustand erfolgt die Fertigung der Bohrungen 19, 20 für die Zylinderstifte 9 und die Zylinderschrauben 8 sowie der Aufnahmebohrung (Öffnung 10) für die Gelenklager 11. Hierbei sind die Bohrungen 19, 20 sowohl in den Lagerlaschen 4 als auch im Grund der jeweiligen Ausnehmung 12 oder Passfedernut 13 ausgebildet.

Eine Kreuzgelenkwelle 1 der vorstehend beschriebenen Art kann sehr hohe Momente bei einer relativ kleinen kompakten Abmessung übertragen. Gleichzeitig ist der Fertigungsaufwand überschaubar. Ein Kreuzgelenk 18 ist damit auch bei beengten Platzverhältnissen realisierbar und gut ein- sowie ausbaubar. Aufgrund der realisierten hohen Tragzahl weist die Kreuzgelenkwelle 1 bzw. das Kreuzgelenk 18 eine hohe Lebensdauer auf.

## Patentansprüche

1. Kreuzgelenkwelle (1) umfassend einen ersten und einen zweiten Gelenkwellenabschnitt (2, 3) und jeweils an einem Befestigungsbereich (7) von erstem und zweitem Gelenkwellenabschnitt (2, 3) insbesondere mittels Schraubverbindungen (8) befestigte Lagerlaschen (4), die jeweils einenends über den jeweils zugeordneten ersten oder zweiten Gelenkwellenabschnitt (2, 3) überstehen und in diesem Überstandsbereich (4a) zwischen sich ein einteilig ausgebildetes Zapfenkreuz (6) halten, das mit jeweils einem Zapfen (5) in einer Öffnung (10) jeweils einer Lagerlasche (4) gelagert ist,
**dadurch gekennzeichnet,**
**dass** jede Lagerlasche (4) zumindest bereichsweise formschlüssig kraftübertragend in jeweils eine von zwei diametral gegenüberliegend im Befestigungsbereich (7) in der Umfangsfläche des ersten und des zweiten Gelenkwellenabschnittes (2, 3) ausgebildete Ausnehmungen (12) eingreift, die jeweils als offene Passfedernut (13) ausgebildet sind, und dass der nicht über den jeweils zugeordneten ersten oder zweiten Gelenkwellenabschnitt (2, 3) überstehende Bereich einer jeden Lagerlasche (4) eine zur jeweils zugeordneten Ausnehmung (12) oder Passfedernut (13) korrespondierend ausgebildete Passfeder aufweist oder als zur jeweils zugeordneten Ausnehmung (12) oder Passfedernut (13) korrespondierend ausgebildete Passfeder ausgebildet ist, wobei die seitlichen Begrenzungswände (15) einer jeden Ausnehmung (12) oder Passfedernut (13) leicht keilförmig zueinander konvergierend von der jeweils zugehörigen Stirnfläche (16) des ersten oder zweiten Gelenkwellenabschnitts (2, 3) beginnend in Axialrichtung der Ausnehmung (12) auf die entgegengesetzte Ausnehmungsrückwand (14) zulaufend ausgebildet sind.

2. Kreuzgelenkwelle (1) nach Anspruch 1, **dadurch gekennzeichnet**, im Grund des vorderen, an die jeweils zugehörige Stirnfläche (16) von erstem oder zweitem Gelenkwellenabschnitt (2, 3) anschließenden Ausnehmungsbereiches randseitig jeweils mindestens ein nicht formschlüssig von einer Lagerlasche (4) ergriffener Freistich (17) ausgebildet ist.

3. Kreuzgelenkwelle (1) nach Anspruch 1 oder 2, **dadurch gekennzeichnet, dass** die Lagerlaschen (4) in die Außenkontur (2,3) des jeweiligen Gelenkwellenabschnitts zumindest annähernd fortführender Weise ausgebildet und in der Ausnehmung (12) angeordnet sind.

4. Kreuzgelenkwelle (1) nach einem der vorhergehenden Ansprüche, **dadurch gekennzeichnet, dass** die Zapfen (5) jeweils in einer/einem, in der jeweils zugeordneten Öffnung (10) der Lagerlasche (4) angeordneten Buchse oder Lager, insbesondere einem Gelenklager (11), gehalten und gelagert sind.

5. Kreuzgelenkwelle (1) nach einem der vorhergehenden Ansprüche, **dadurch gekennzeichnet, dass** die Kreuzgelenkwelle (1) Bestandteil eines Richtwalzenantriebs einer Richtmaschine ist.

6. Kreuzgelenkwelle (1) nach einem der vorhergehenden Ansprüche, **dadurch gekennzeichnet, dass** die Kreuzgelenkwelle (1) Bestandteil einer Doppelkreuzgelenkwelle ist, deren beide Kreuzgelenke (18) jeweils einen ersten und einen zweiten Gelenkwellenabschnitt mit mittels Lagerschalen (4) angekoppeltem Zapfenkreuz (6) aufweisen.

7. Richtmaschine mit einer Anzahl von Richtwalzen und einem Antrieb für die Richtwalzen, wobei die Richtwalzen in einer Wechselkassette angeordnet und über Gelenkwellen mit einem Hauptgetriebe verbindbar sind, **dadurch gekennzeichnet, dass** die Gelenkwellen zumindest teilweise als Kreuzgelenkwelle (1) nach einem der Ansprüche 1 - 6 ausgebildet sind.

## Claims

1. Cardan-joint shaft comprising a first articulated shaft section (2) and a second articulated shaft section (3) and respective bearing straps (4), which are each fastened, particularly by means of screw connections (8), to a fastening region (7) of the first and second articulated shaft section (2, 3) and which each project at one end beyond the respectively associated first or second articulated shaft section (2, 3) and in this projection region (4a) retain therebetween an integrally constructed pin cross (6) mounted by a respective pin (5) in an opening (10) of each bearing strap (4), **characterised in that** each bearing strap (4) mechanically positively engages at least regionally in a respective one of two diametrically opposite recesses (12), which are formed in the fastening region (7) in the circumferential surface of the first and second articulated shaft section (2, 3) so as to be able to transmit force and which are each formed as an open key groove (13), and that the region, which does not project beyond the respective associated first or second articulated joint shaft (2, 3), of each bearing strap (4) has a key formed to correspond with the respectively associated recess (12) or key groove (13) or is constructed as a key formed to correspond with the respectively associated recess (12) or key groove (13), wherein the lateral boundary walls (15) of each recess (12) or key groove (13) are formed to run in axial direction of the recess (12) with slightly wedge-shaped convergence towards one another beginning at the respectively associated end surface (16) of the first or second articulated shaft section (2, 3) up to the opposite, rear wall (14).

2. Cardan-joint shaft (1) according to claim 1, **characterised in that** at least one respective undercut (17) not mechanically positively engaged by a bearing strap (4) is formed at the edges in the base of the front recess region adjoining the respectively associated end surface (16) of the first or second articulated shaft section (2, 3).

3. Cardan-joint shaft (1) according to claim 1 or claim 2, **characterised in that** the bearing straps (4) are formed in the outer contour (2, 3) of the respective articulated shaft section at least approximately as a continuation and are arranged in the recess (12).

4. Cardan-joint shaft (1) according to any one of the preceding claims, **characterised in that** the pins (5) are each retained and mounted in a bush or bearing, particularly a spherical bearing (11), arranged in the respectively associated opening (10) of the bearing strap (4).

5. Cardan-joint shaft (1) according to any one of the preceding claims, **characterised in that** the Cardan-joint shaft (1) is a component of a straightening roll drive of a straightening machine.

6. Cardan-joint shaft (1) according to any one of the preceding claims, **characterised in that** the Cardan-joint shaft (1) is a component of a double-Cardan-joint shaft, the two cross joints (18) of which each have a first and second articulated shaft section with a pin cross (6) coupled by means of bearing shells (4).

7. Straightening machine with a plurality of straightening rolls and a drive for the straightening rolls, wherein the straightening rolls are arranged in an exchange cassette and are connectible with a main transmission by way of articulated shafts, **characterised in that** the articulated shafts are constructed at least partly as Cardan-joint shafts (1) according to any one of claims 1 to 6.

## Revendications

1. Arbre de transmission à cardan (1) comprenant un premier et un deuxième tronçon d'arbre de transmission (2, 3) et des éclisses (4) respectivement fixées, en particulier au moyen de liaisons à vis (8), contre une zone de fixation (7) du premier et du deuxième tronçon d'arbre de transmission (2, 3), qui font respectivement saillie à une extrémité au-delà du premier ou du deuxième tronçon d'arbre de transmission respectivement correspondant (2, 3) et maintiennent dans cette zone de saillie (4a) entre eux un croisillon (6) réalisé en une seule pièce qui est monté avec respectivement un tourillon (5) dans une ouverture (10) de respectivement une éclisse (4), **caractérisé en ce que** chaque éclisse (4) vient s'engrener, au moins par zone, par complémentarité de forme, d'une manière à transférer une force, dans respectivement un parmi deux évidements (12) réalisés en étant diamétralement opposés dans la zone de fixation (7), dans la surface périphérique du premier et du deuxième tronçon d'arbre de transmission (2, 3), qui sont respectivement réalisés sous la forme d'un écrou de clavette ouvert (13), et **en ce que** la zone de chacune des éclisses (4), qui ne fait pas saillie au-delà du premier ou du deuxième tronçon d'arbre de transmission respectivement correspondant (2, 3), présente une clavette réalisée de manière correspondante à l'évidement (12) ou à l'écrou de clavette (13) respectivement correspondant ou est réalisée sous la forme d'une clavette réalisée de manière correspondante à l'évidement (12) ou à l'écrou de clavette (13) respectivement correspondant, les parois de délimitation latérales (15) respectivement de l'évidement (12) ou de l'écrou de clavette (13) étant réalisées de manière parfaitement conique, en convergeant l'un vers l'autre via une légère conicité depuis la surface frontale respectivement correspondante (16) du premier ou du deuxième tronçon d'arbre de transmission (2, 3) en commençant dans la direction axiale de l'évidement (12) jusqu'à la paroi dorsale opposée (14) de l'évidement.

2. Arbre de transmission à cardan (1) selon la revendication 1, **caractérisé en ce que**, à la base de la zone d'évidement avant qui se raccorde à la surface frontale respectivement correspondante (16) du premier ou du deuxième tronçon d'arbre de transmission (2, 3), est réalisée, du côté marginal, respectivement au moins une rainure de dégagement (17) dans laquelle ne vient pas s'engrener une éclisse (4) par complémentarité de forme.

3. Arbre de transmission à cardan (1) selon la revendication 1 ou 2, **caractérisé en ce que** les éclisses (4) sont réalisées, dans le contour externe (2, 3) du tronçon d'arbre de transmission respectif, en continu au moins de manière approximative et sont disposées dans l'évidement (12).

4. Arbre de transmission à cardan (1) selon l'une quelconque des revendications précédentes, **caractérisé en ce que** les tourillons (5) sont maintenus et sont montés respectivement dans une douille ou un palier, en particulier dans un palier à rotule (11), disposé dans l'ouverture respectivement correspondante (10) de l'éclisse (4).

5. Arbre de transmission à cardan (1) selon l'une quelconque des revendications précédentes, **caractérisé en ce que** l'arbre de transmission à cardan (1) fait partie d'un entraînement de dressage par rouleaux d'une machine à dresser.

6. Arbre de transmission à cardan (1) selon l'une quelconque des revendications précédentes, **caractérisé en ce que** l'arbre de transmission à cardan (1) fait partie d'un double arbre de transmission à cardan, dont les deux transmissions à cardan (18) présentent respectivement un premier et un second tronçon d'arbre de transmission comprenant un croisillon (6) accouplé au moyen d'éclisses (4).

7. Machine à dresser comprenant un certain nombre de rouleaux de dressage et un entraînement pour les rouleaux de dressage, les rouleaux de dressage étant disposés dans une cassette de rechange et pouvant être reliés via des arbres de transmission à une transmission principale, **caractérisée en ce que** les arbres de transmission sont réalisés au moins en partie sous la forme d'un arbre de transmission à cardan (1) selon l'une quelconque des revendications 1 à 6.
